# EUROPEAN PATENT APPLICATION

(11) **EP 2 437 220 A1**
(43) Date of publication of application: **04.04.2012**
(21) Application number: 10306051.3
(22) Date of filing: 29.09.2010
(51) Int. Cl.: G06T 19/20

(54) **Method and arrangement for censoring content in three-dimensional images**

(71) Applicant: Alcatel Lucent, 75007 Paris (FR)
(72) Inventor: Lievens, Sammy, 2930, Brasschaat (BE); Van Herrenweghe, Hans, 2520, Oelegem (BE); Van den Broeck, Marc, 2860, Sint-Katelijne-Waver (BE)
(74) Representative: ALU Antw Patent Attorneys

(57) **Abstract**

A method for censoring content on a three-dimensional image comprises a step of identifying in said three-dimensional image a three-dimensional object to be censored, and to replace said three-dimensional object to be censored by three-dimensional replacing contents in said three-dimensional image.

## Description

The present invention relates to a method and apparatus for censoring content in images, more in particular for censoring content in three dimensional, hereafter abbreviated by 3D, images.

Current visual censorship methods are based on two-dimensional, hereafter abbreviated by 2D, methods which employ e.g. a blurring filter or a black bar in front of the object such as a face. These methods are inherently 2D based and will therefore be insufficient for using in 3D and free-viewpoint content. This can be understood from the fact that 3D content and displays will not only display the 2D texture and contour of the object, but also its 3D shape. Simple censoring methods such as placing a black bar in front of the object will mask the texture of the object but not its actual 3D shape, thereby making identification still possible. With free-viewpoint content and display technologies the problem becomes even bigger. Blurring out the object or placing a black bar in front of a 3D object are 2D based methods, such that the blurring layer or black bar will be rendered as a 2D object in the 3D scene , in which the viewer can move freely around, by selecting its viewpoint. In this way a viewer can move around this censorship object for yet viewing the censored object in full detail from another viewpoint.

An object of embodiments of the present invention is therefore to.provide a method for censoring three-dimensional objects.

According to embodiments of the invention this object is achieved by a method for censoring content on a three-dimensional image, said method comprising a step of identifying , in said three-dimensional image, a three-dimensional object to be censored, and to replace said three-dimensional object to be censored by three-dimensional replacing contents in said three-dimensional image.

In this way, a simple, but very efficient method is obtained, not showing any drawbacks of the prior art methods. Thus it will become possible to e.g. censor people in a 3D scene, of which the 3D displays are still showing the original 3D content, but with the censored people being replaced by 3D replacement content. This method has a further advantage of still providing a censoring of the to-be-censored objects, even when projected on 2D displays. It thus provides a very simple, yet versatile technique.

In a first embodiment said three-dimensional replacing content is a three-dimensional replacing object.

This three-dimensional replacing object may be a fixed 3D avatar or being selected from a predetermined set of three-dimensional objects.

This predetermined set may again comprise a set of avatars, or other 3D objects, wherein said selection is based upon correspondence between said three-dimensional replacing object and said three-dimensional object to be censored.

In case the 3D image is generated from two or more two-dimensional images captured by a corresponding plurality of cameras, said step of identifying said three-dimensional object to be censored may comprise identifying corresponding 2-dimensional objects on said plurality of two-dimensional images for enabling an identification of 3-dimensional voxels of said three-dimensional object to be censored.

In this way 3D voxels, meaning 3D pixels, are identified, which can then be replaced by replacement voxels having a different content, such as to thereby generate said replacement object from said replacement voxels. Alternatively, as mentioned with respect to the previously mentioned variants in 3D, the identified 3D object can still be replaced by another object having a different form or morphology, such as an avatar. In this case more than the identified voxels can be replaced, or only part of them. In the latter case the voxels of the identified object which were not replaced by e.g. the avatar voxels, will anyhow be replaced via replacement voxels matching the surroundings of this object, or, alternatively the replacement object can be scaled to fit the size of the object to be replaced. In all cases the replacement object will have a different shape compared to the original object.

The present invention relates as well to embodiments of anarrangement for performing the present method as well as to a computer program product comprising software adapted to perform the above mentioned method steps when executed on a data-processing apparatus .

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 shows a high-level schematic of an embodiment of the method,

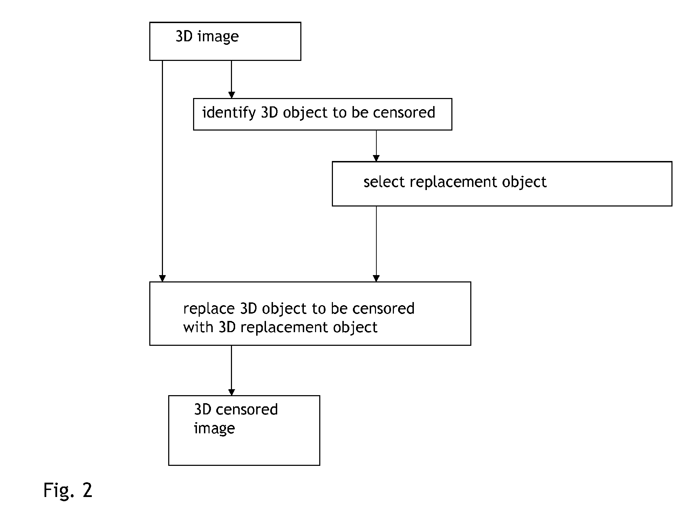

Fig. 2 shows a more detailed embodiment of a variant of the method,

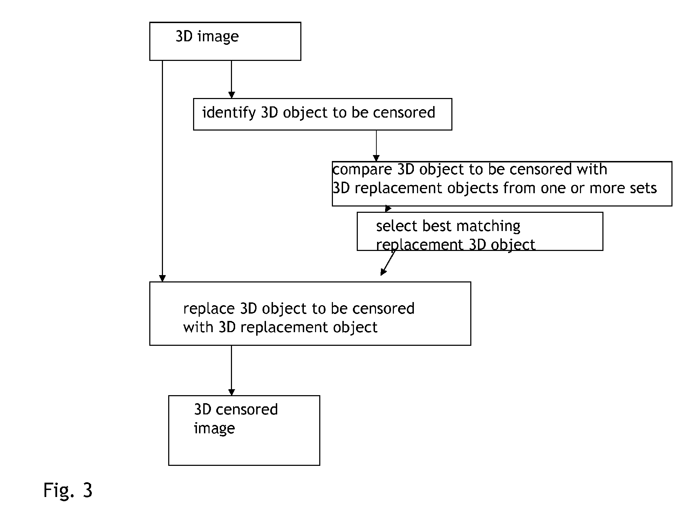

Fig. 3 shows a more detailed embodiment of another variant of the method,

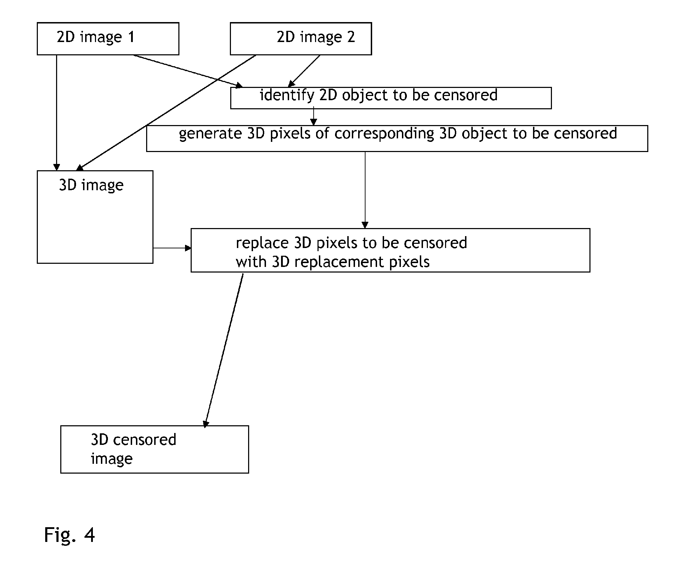

Fig. 4 shows another variant of the method,
Figs. 5a-b show an example of a representation of a three-dimensional image of two persons, with the faces of both persons being censored in accordance with embodiments of the present method.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

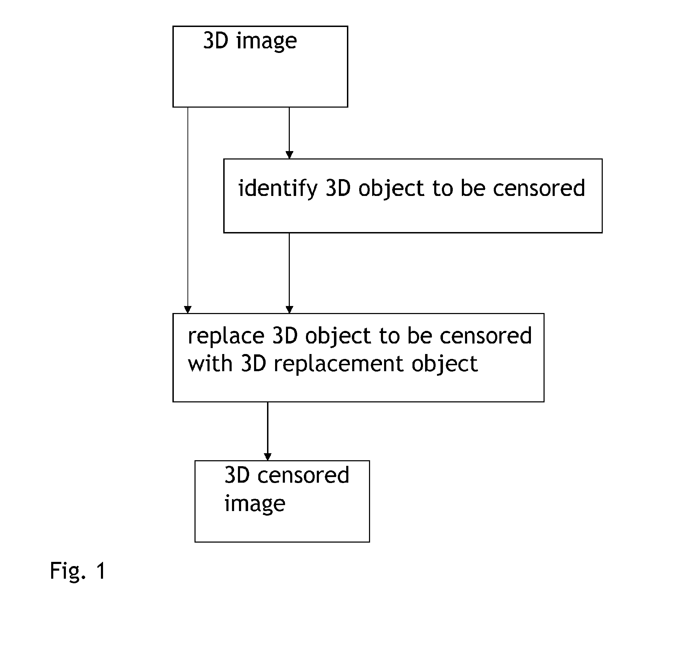

Fig. 1 shows a high level schematic scheme of an embodiment of the method. A 3D image, for being displayed on a 3D screen, of which some content part is to be censored, is first undergoing a search for identifying this content to be censored. Such content may be, e.g. a human being, or other information e.g. personal details in a diary, which is preferred to be kept secret, or some not yet public material which is preferred to be kept secret etc.

Such identification techniques can be done automatically e.g. by means of recognition techniques, or can be done manually. Once the object to be censored is identified on the 3D image, it will be replaced, on the 3D image, by a 3D replacement object. In case of e.g. a human being, this may be a 3D avatar. However, also the 3D voxels, constituting the 3D object to be censored, can just be replaced by other voxels with a totally different content. As an example, all 3D voxels, constituting the 3Dobject to be censored, can be replaced by voxels, all having a black or other color. All these 3D replacement voxels, again constitute a 3D replacement object. In some embodiments also 3D meshes can be replaced in case 3D meshes are used for representing the 3D objects.

The replacement object can be a predetermined avatar, or can be selected from a group of predetermined objects, the selection being determined by means of matching techniques. If, for example, both a human being and a book are to be censored on the same 3D image, the replacement object for the human being has to be selected from another group, as compared to the replacement object for the book to be censored. And even the group of replacement objects can then contain several predetermined objects of a certain size, but in other embodiments, the size and further morphology can be adapted to fit the size and morphology of the object to the replaced. In the previously mentioned examples of voxel replacement, a more or less perfect matching is obtained.

This technique can also be performed starting from 2D images from a same scene, taken by 2D stereoscopic cameras. These 2D images will be combined to generate a 3D image, of which a 3D object is to be censored. In this case object recognition techniques for determining the object to be censored , whether automatic or manual, can however be performed on the 2D images. Once the object to be censored in 2D is determined, its pixels on the corresponding images are as well known, and they can be used to generate 3D voxels , by known techniques. These 3D voxels then constitute the 3D object to be censored and they can be replaced by voxels with a different content, or the complete group can be replaced by a 3D avatar or another best matching 3D object.

In these cases more than the identified 3D voxels will be replaced, as the 3D avatar can have a different form/morphology than the original object. For avatars which are larger, thus occupying more voxels in the 3D space, not only the voxels of the identified 3D object are to be replaced, but also some surrounding voxels. Alternatively, in case the avatar is a bit smaller compared to the 3D object to be replaced, the avatar can be resized or scaled in order to match the size of the original object to be replaced. And even some of the voxels surrounding the avatar and part of the original 3D image also need to be replaced e.g. via an extension of the surrounding landscape, neighbouring persons, objects etc.

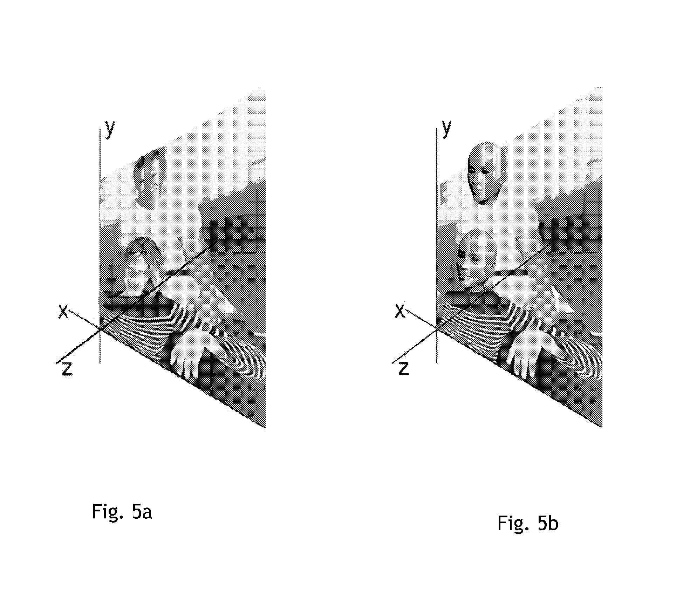

Figs. 5a-b show an example of an embodiment of the method. It is to be mentioned that, as at the time of filing this application we are limited to only a 2D representation of a 3D image, Fig. 5a and b refer to 3D images, for being presented on a 3D display. This is suggested by the 3 axes in the three dimensions as shown in both figures, these 3 axes however not being present in "real" 3D representions or displays.

Fig. 5a thus shows an image of two persons, of which the heads are to be censored. Fig. 5b shows the result of the censoring operation, in this case both heads being replaced by an avatar head.

While the principles of the invention have been described above in connection with specific apparatus, it is to be clearly understood that this description is made only by way of example and not as a limitation on the scope of the invention, as defined in the appended claims.

## Claims

1. Method for censoring content on a three-dimensional image, said method comprising a step of identifying in said three-dimensional image a three-dimensional object to be censored, and to replace said three-dimensional object to be censored by three-dimensional replacing contents in said three-dimensional image.

2. Method according to claim 1 wherein said three-dimensional replacing content is a three-dimensional replacing object.

3. Method according to claim 2 wherein said three-dimensional replacing object is selected from a predetermined set of three-dimensional objects.

4. Method according to claim 3, wherein said selection is based upon correspondence between said three-dimensional replacing object and said three-dimensional object to be censored.

5. Method according to claims 2, 3 or 4 wherein said three-dimensional replacing object is a three-dimensional avatar.

6. Method according to claim 1 wherein said three-dimensional image is generated from a plurality of two-dimensional images captured by a corresponding plurality of cameras, and wherein said step of identifying said three-dimensional object to be censored comprises identifying corresponding 2-dimensional objects on said plurality of two-dimensional images for enabling an identification of 3-dimensional voxels of said three-dimensional object to be censored.

7. Method according to claim 6 wherein said three-dimensional voxels are replaced by replacement voxels having a different content, such as to thereby generate said replacement object from said replacement voxels.

8. Method according to any of the previous claims, wherein said steps are performed on successive three-dimensional images constituting a three-dimensional video sequence.

9. Arrangement for censoring content of a three-dimensional image provided as input to this arrangement, said arrangement comprising means adapted to perform the steps as set out in any of the previous claims 1 to 8.

10. Computer program product comprising software adapted to perform the above steps in accordance to any of the previous claims 1-8, when executed on a data-processing apparatus.
